# EUROPEAN PATENT APPLICATION

(11) **EP 4 240 070 A1**
(43) Date of publication of application: **06.09.2023**
(21) Application number: 20965120.7
(22) Date of filing: 10.12.2020
(51) Int. Cl.: H04W 56/00, H04W 92/18, H04W 84/20

(54) **WIRELESS DEVICE, CONTROL CIRCUIT, AND STORAGE MEDIUM**

(71) Applicant: MITSUBISHI ELECTRIC CORPORATION, Chiyoda-ku Tokyo 100-8310 (JP)
(72) Inventor: UCHINO, Daichi, Tokyo 100-8310 (JP)
(74) Representative: Pfenning, Meinig & Partner mbB
(86) International application number: PCT/JP2020/046105
(87) International publication number: WO 2022/123738

(57) **Abstract**

A wireless device is a wireless device operable to switch between a function of a master wireless device (404) and a function of a slave wireless device (403) in a group to which multiple wireless devices belong, where the multiple wireless devices communicate with each other using a synchronization signal, the master wireless device (404) controls another wireless device belonging to the group, and the slave wireless device (403) is controlled by the master wireless device (404). The wireless device includes a transmission unit capable of transmitting a signal, a reception unit capable of receiving a signal, and a control unit that causes the transmission unit to transmit, toward the master wireless device (404), information about a synchronization signal detected, when the wireless device is operating as the slave wireless device (403), and the reception unit receives and detects the synchronization signal from a wireless device (401) not belonging to the group (405).

## Description

### Field

The present disclosure relates to a wireless device used for wireless communication, to a control circuit, and to a storage medium.

### Background

Third Generation Partnership Project (3GPP), a standardization body for mobile communication systems, develops standards for a fifth generation wireless access system, which is also known as 5G wireless access system. A 5G wireless access system provides a system capacity 1000 times greater than, a data transmission speed 100 times faster than, a delay in data processing one-tenth of, and the number of simultaneously-connectable communication terminals 100 times greater than, those of a long term evolution (LTE) system. Requirements for a 5G wireless access system also include power consumption reduction and device cost reduction with respect to those of an LTE system.

A 5G wireless access system has been proposed to provide Cellular Vehicle-to-Vehicle (C-V2V) functionality, which is a vehicle-to-vehicle communication standard based on 5G/LTE, such as one described in Non Patent Literature 1. More detailed technological aspects are described in Non

### Patent Literature 2.

Non Patent Literature 1 describes Sidelink, which is a local network in vehicle-to-vehicle communication, and a user equipment (UE) group, which represents a network configuration in vehicle-to-vehicle communication. Non Patent Literature 1 describes that a vehicle that undertakes control in a UE group is referred to as head UE, and a vehicle under control of the head UE is referred to as member UE. Technology for a vehicular radio device compliant to Non Patent Literatures 1 and 2 is a technology applicable not only to automobiles but also to automated transportation vehicles such as an automated guided vehicle (AGV) and to robots.

A vehicular radio device compliant to Non Patent Literatures 1 and 2 has functionality to transmit a physical Sidelink broadcast control channel (PSBCH) with a period of 160 ms, and to transmit a Sidelink synchronization signal (SLSS), which is a synchronization signal. Vehicular radio devices communicate with each other based on Sidelink by using the above signals, and form a UE group even in an environment outside a communication area, without a base station. This enables a local network to be established in which vehicular radio devices in a UE group transmit and receive data therebetween.

A vehicular radio device that is permitted to transmit the above-mentioned SLSS, which is a synchronization signal, is determined by a configuration setting of the vehicular radio device. Non Patent Literatures 1 and 2 describe that priority is given based on a synchronization precision level, and setting can also be made to determine the head UE in descending order of priority (level 1 is the highest).

In addition, when vehicular radio devices located in a communicable area have a same priority, such vehicular radio devices can follow different synchronization sources. Non Patent Literature 1 describes that one UE can belong to up to three different UE groups.

The foregoing levels are as follows. Level 1 is given to a terminal that has been connected to, and synchronized with, a base station or a global positioning system (GPS). Level 2 is given to a terminal that has been connected to, and synchronized with, a terminal of level 1. Level 3 is given to a terminal that has been connected to, and synchronized with, a terminal of level 2. Level 4 is given to a terminal that has been synchronized in another manner. Level 5 is given to a terminal that operates according to an internal clock of the radio device. That is, a radio device of level 5 is a radio device traveling outside the communication range (outside the communication area) of a base station, and incapable of receiving a global positioning system (GPS) signal, or operating at a location where no GPS signal can be received or GPS accuracy is low. Note that a condition of being outside the communication range of a base station is hereinafter referred to simply as "out of range".

A signal used in Sidelink has a high frequency of 5.9 GHz, thereby making it difficult for the signal to propagate around an obstacle to reach a destination. Thus, when a vehicular radio device of level 5 is running in an indoor place that is out of range and where no GPS can be received, and there is an obstacle between vehicular radio devices at a location such as a bend in a pathway or a crossing, such obstacle interrupts signals, and thus prevents the vehicular radio devices from communicating with each other via Sidelink. This situation is what is called non-line-of-sight environment. Note that a situation in which no obstacle exists between vehicular radio devices, and the vehicular radio devices can thus communicate with each other via Sidelink is hereinafter referred to also as line-of-sight environment.

To enable vehicular radio devices to communicate with each other using a C-V2V function even in a non-line-of-sight environment, a method is sometimes used in which a dedicated head UE is fixedly installed at a bend in a pathway or a crossing, and vehicular radio devices in a non-line-of-sight environment are then caused to become member UEs served by the dedicated head UE fixedly installed, thereby enabling communication via the dedicated head UE. This enables vehicular radio devices in a non-line-of-sight environment to obtain mutual information from each other via the dedicated head UE to avoid collision, to run in opposite directions, and/or to perform another action.

### Citation List

### Non Patent Literature

Non Patent Literature 1: 3GPP TR 37.985 v16.0.0 (2020-06)
Non Patent Literature 2: 3GPP TS 36.331 v16.1.1 (2020-07)

### Summary

### Technical Problem

However, installation of a dedicated head UE in all locations that may cause a non-line-of-sight environment will require an increased number of wireless devices, thereby requiring complicated management. An increased number of wireless devices will then increase initial cost and running cost.

The present disclosure has been made in view of the foregoing, and it is an object of the present disclosure to provide a wireless device that enables wireless communication terminals to avoid collision and to run in opposite directions at a place where a non-line-of-sight environment may arise while preventing an increase in the number of wireless devices.

### Solution to Problem

In order to solve the above-described problems and achieve the object, a wireless device according to the present disclosure is a wireless device operable to switch between a function of a master wireless device and a function of a slave wireless device in a group to which multiple wireless devices belong, where the multiple wireless devices communicate with each other using a synchronization signal, the master wireless device controls another wireless device belonging to the group, and the slave wireless device is controlled by the master wireless device. The wireless device includes a transmission unit capable of transmitting a signal, a reception unit capable of receiving a signal, and a control unit that causes the transmission unit to transmit, toward the master wireless device, information about a synchronization signal detected, when the wireless device is operating as the slave wireless device, and the reception unit receives and detects the synchronization signal from a wireless device not belonging to the group.

### Advantageous Effects of Invention

A wireless device according to the present disclosure is advantageous in enabling wireless communication terminals to avoid collision and to run in opposite directions at a place where a non-line-of-sight environment may arise while preventing an increase in the number of wireless devices.

### Brief Description of Drawings

FIG. 1 is a block diagram illustrating a configuration of a wireless device according to a first embodiment of the present disclosure.
FIG. 2 is a diagram illustrating a situation in which multiple UEs according to the first embodiment are running on a pathway.
FIG. 3 is a diagram illustrating a situation in which the head UE has been changed from the situation illustrated in FIG. 2.
FIG. 4 is an operational sequence diagram of when the head UE is changed from one to another in the first embodiment.
FIG. 5 is a diagram illustrating a situation in which multiple UEs according to a comparative example, each of which is a wireless device, are running on a pathway.
FIG. 6 is an operational sequence diagram in the comparative example.
FIG. 7 is a diagram illustrating a situation in which the UEs illustrated in FIG. 5 are now in a line-of-sight environment.
FIG. 8 is a diagram illustrating a configuration of a system according to the first embodiment.
FIG. 9 is a diagram illustrating an example of hardware configuration of the UEs according to the first embodiment.
FIG. 10 is a diagram illustrating another example of hardware configuration of the UEs according to the first embodiment.
FIG. 11 is a diagram illustrating still another example of hardware configuration of the UEs according to the first embodiment.
FIG. 12 is a diagram illustrating a situation in which a UE group includes multiple member UEs at forward and backward positions along a travel direction of the UE group in the first embodiment.

### Description of Embodiment

A wireless device, a control circuit, and a storage medium according to an embodiment of the present disclosure will be described in detail below with reference to the drawings.

### First Embodiment.

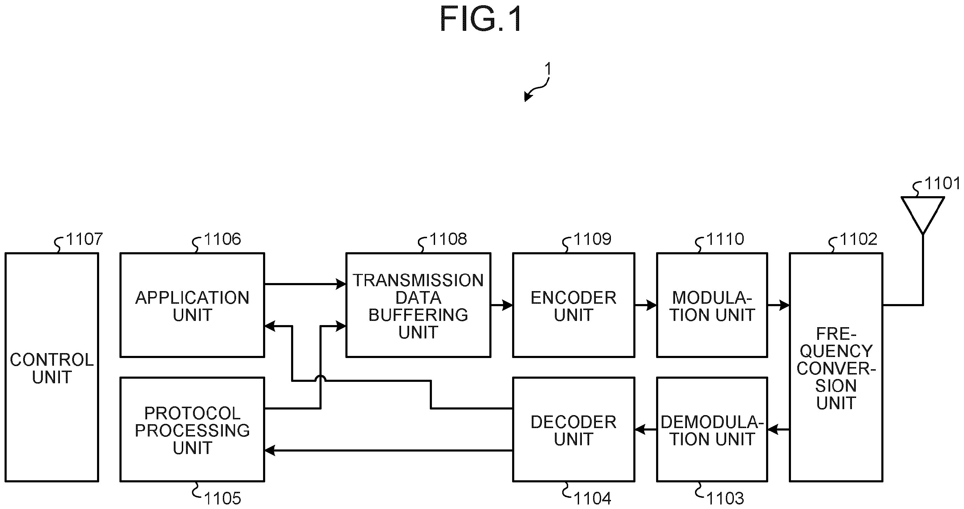

FIG. 1 is a block diagram illustrating a configuration of a wireless device according to a first embodiment of the present disclosure. A wireless device 1, which is a communication terminal device, includes an antenna 1101, a frequency conversion unit 1102, a demodulation unit 1103, a decoder unit 1104, a protocol processing unit 1105, an application unit 1106, a control unit 1107, a transmission data buffering unit 1108, an encoder unit 1109, and a modulation unit 1110.

An operation of each component when the antenna 1101 receives a signal will be described. A signal received by the antenna 1101 is converted into a signal having a baseband frequency by the frequency conversion unit 1102. The signal having a baseband frequency is demodulated by the demodulation unit 1103, and the signal obtained by demodulation is decoded by the decoder unit 1104. The signal obtained by decoding is passed to the protocol processing unit 1105 or to the application unit 1106.

An operation of each component when the antenna 1101 transmits a signal will next be described. A signal received from the application unit 1106 or from the protocol processing unit 1105 is temporarily stored in the transmission data buffering unit 1108. Data temporarily stored in the transmission data buffering unit 1108 is sent to the encoder unit 1109. The signal sent from the transmission data buffering unit 1108 is encoded by the encoder unit 1109, and the signal obtained by encoding is modulated by the modulation unit 1110. The signal obtained by modulation is converted into a signal having a radio frequency (RF) frequency by the frequency conversion unit 1102. The signal having an RF frequency is emitted to the air from the antenna 1101. The control unit 1107 controls the foregoing operation of receiving a signal and of transmitting a signal.

The wireless device 1 includes running means such as tires and a drive unit for driving the tires, and enables autonomous running. The wireless device 1 is hereinafter also referred to as UE.

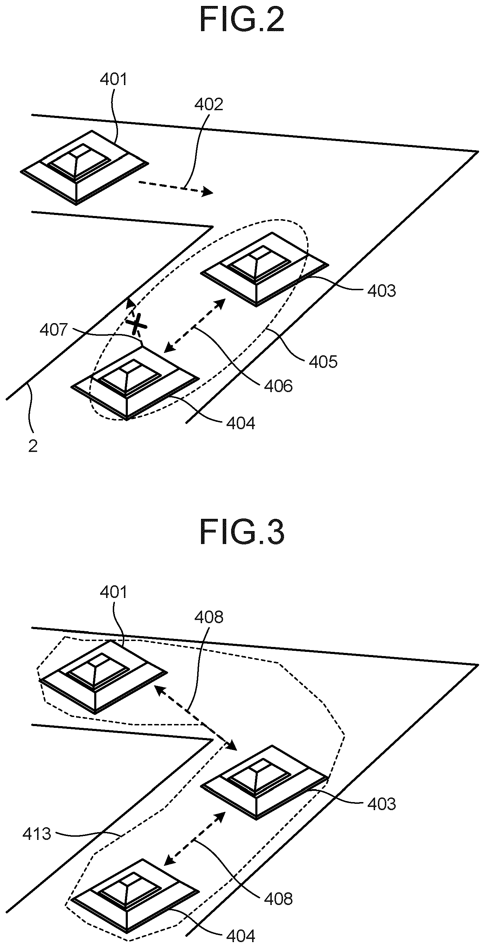

FIG. 2 is a diagram illustrating a situation in which multiple UEs according to the first embodiment, each of which is a wireless device, are running on a pathway. Multiple UEs 401, 403, and 404 are capable of forming a UE group, which is a local network in which the UEs 401, 403, and 404 communicate with each other using a C-V2V function, which is a vehicle-to-vehicle communication standard based on 5G/LTE. A UE that controls other UEs in a UE group is called head UE. A head UE operates as a wireless device that undertakes control (hereinafter referred to as master wireless device). A UE controlled by the head UE in a UE group is called member UE. A member UE operates as a wireless device to be controlled (hereinafter referred to as slave wireless device).

FIG. 1 illustrates the multiple UEs 401, 403, and 404 as running near a bend in a pathway. There is not a wall 2, which would act as an obstacle, between the UE 403 and the UE 404, thereby allowing the UE 403 and the UE 404 to communicate with each other using a Sidelink link 406 to form a UE group 405. In this example, the UE 404 is the head UE, and the UE 403 is the member UE.

The UE group 405 is running in formation such that the UE 403, which is the member UE, is running at the front, followed by the UE 404, which is the head UE. That is, the UE group 405 is running in a direction toward the UE 401 with the UE 403, which is the member UE, running at the front.

The wall 2, which acts as an obstacle, exists between the UE 404, which is the head UE, and the UE 401, not belonging to the UE group 405. This causes the UE 401 and the UE 404 to be in a non-line-of-sight environment with respect to each other, in which a direct communication cannot be established therebetween. This prevents an SLSS 407 from the UE 404, which is the head UE, from reaching the UE 401. An SLSS is transmitted via a C-plane.

The UE 401 belongs to none of UE groups, and is running alone in a direction toward the UE 403, which is the member UE. To run in opposite directions while avoiding collision between UEs when one of the UEs runs through a bend in a pathway or a crossing, the UEs are required to communicate with each other using Sidelink to form a UE group and to share some types of information such as location information and travel direction information among the UEs in that UE group. In the example of FIG. 2, the UE 404, which is the head UE, and the UE 401 are in a non-line-of-sight environment with respect to each other, thereby preventing the UE 401 from belonging to the UE group 405 until the UE 404 and the UE 401 will be in a line-of-sight environment with respect to each other.

Thus, the UE 401 and the UE 403 are unable to know the mutual travel routes, which may result in a collision between the UE 401 and the UE 403 when the travel route of the UE 401 and the travel route of the UE 403 intersect before the UE 401 and the UE 404 will be in a line-of-sight environment with respect to each other. Accordingly, the UEs 401, 403, and 404 of the present first embodiment change the head UE from one to another to avoid collision.

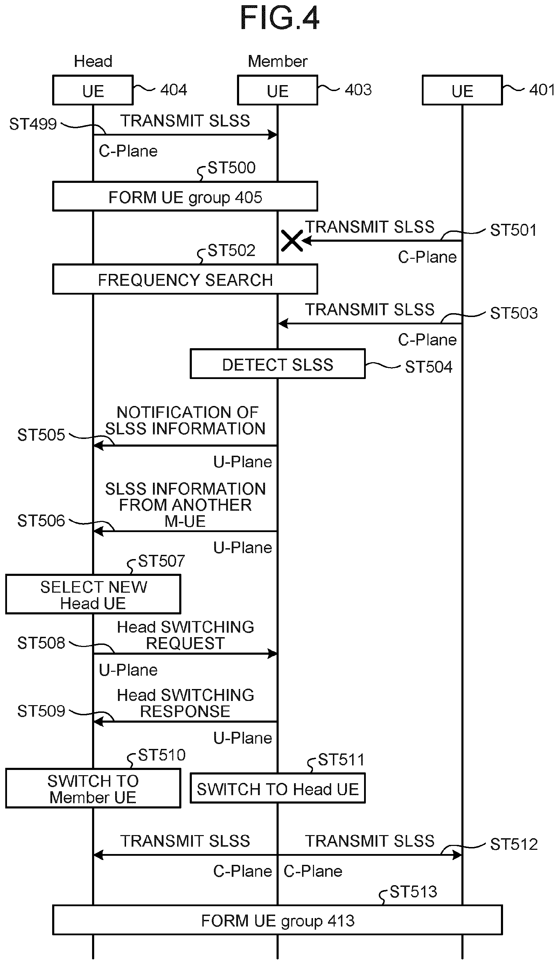

FIG. 3 is a diagram illustrating a situation in which the head UE has been changed from the situation illustrated in FIG. 2. FIG. 4 is an operational sequence diagram of when the head UE is changed from one to another in the first embodiment. Since the UE 401 belongs to none of UE groups, the UE 401 periodically transmits an SLSS 402 to find a UE that can act as a member UE in a UE group in which the UE 401 is to act as the head UE. Note that Sidelink standardized by 3GPP is a terminal-to-terminal communication scheme, an example of which is an interface called PC5.

As illustrated in FIG. 4, when an SLSS transmitted by the UE 404 is received by the UE 403 (ST 499), a UE group 405 is formed in which the UE 404 acts as the head UE and the UE 403 acts as a member UE (ST 500). The UE 401 not belonging to the UE group 405 periodically transmits the SLSS 402 (ST 501 and ST 503).

The UEs 403 and 404 belonging to the UE group 405 periodically perform a frequency search (ST 502). Frequency search is a process of searching a signal transmitted at a frequency other than the frequency of the signal used for communication in the UE group 405. The SLSS 402 that reached the UE 403 (ST 501) before the frequency search (ST 502) is not received by the UE 403. The SLSS 402 that reached the UE 403 (ST 503) after the frequency search (ST 502) is received and detected by the UE 403 (ST 504).

Due to already a member of the UE group 405, the UE 403 does not form a UE group with the UE 401. Instead of forming a UE group with the UE 401, the UE 403 notifies the UE 404, which is the head UE, of information of the SLSS 402 and the arrival direction and reception strength of the SLSS 402 detected, via a U-plane (ST 505).

Software of the UE 404, which is the head UE, causes the UE 404 to perform a function to receive the information of the SLSS 402 and the arrival direction and reception strength of the SLSS 402 described above from one or more member UEs via a U-plane (ST 506), and to determine in which direction the UE 401 exists.

Then, since the head UE 404 can detect, and thus knows in advance, the relative location of each of the member UE(s) belonging to the UE group 405 based on Timing Advance (TA), the head UE 404 selects a member UE that can cause the UE 401 transmitting the SLSS 402 and the member UE(s) belonging to the UE group 405 to belong to a same UE group, based on the arrival direction and reception strength of the SLSS and on the relative location of each of the member UE(s), and selects that member UE as a new head UE (ST 507). A UE in a line-of-sight environment with respect to all the member UEs at that time is selected as the new head UE. Note that due to performing of a non-line-of-sight determination, the head UE 404 does not select a new head UE (ST 507) when the head UE 404 itself receives the SLSS 402, meaning that the head UE 404 is in a line-of-sight environment with respect to the UE 401. FIG. 3 illustrates a situation in which the UE 403 has been selected as a new head UE.

When a member UE is selected as a new head UE in the process of selection of a new head UE (ST 507), the software of the UE 404, which is the head UE, causes the UE 404 to notify the selected member UE of a request for switching to the head UE through inter-application communication using a U-plane (ST 508).

The software of the member UE that has received the request for switching to the head UE causes that member UE to notify the head UE of a response to switching to the head UE when that member UE has a configuration setting or performance proper for acting as the head UE (ST 509). This notification is transmitted through inter-application communication using a U-plane.

The UE 403, which is the member UE selected as a new head UE, and the UE 404, which is the head UE, notify each other, for example, of mutual countdown notifications. The head UE performs an operation of switching to a member UE (ST 510), and the member UE performs an operation of switching to the head UE (ST 511) in synchronization with each other.

In this respect, to prevent a member UE that has belonged to the UE group 405 from belonging to a new UE group including the UE 401 as the head UE due to the SLSS 402 periodically transmitted from the UE 401, selection of a new head UE (ST 507), switching from the head UE to a member UE (ST 510), and switching from a member UE to the head UE (ST 511) described above are completed within a transmission interval (e.g., 160 ms) of the SLSS 402. The new head UE then transmits an SLSS 408 to the member UE(s) of the former UE group 405 and to the UE 401 (ST 512). This causes a new UE group 413 to be formed (ST 513). In the UE group 413, the UE 403 acts as the head UE, and both the UE 401 and the UE 404, which are member UEs, are now in a line-of-sight environment with respect to the head UE.

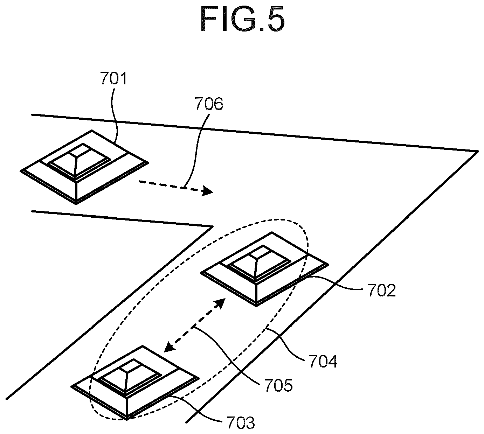

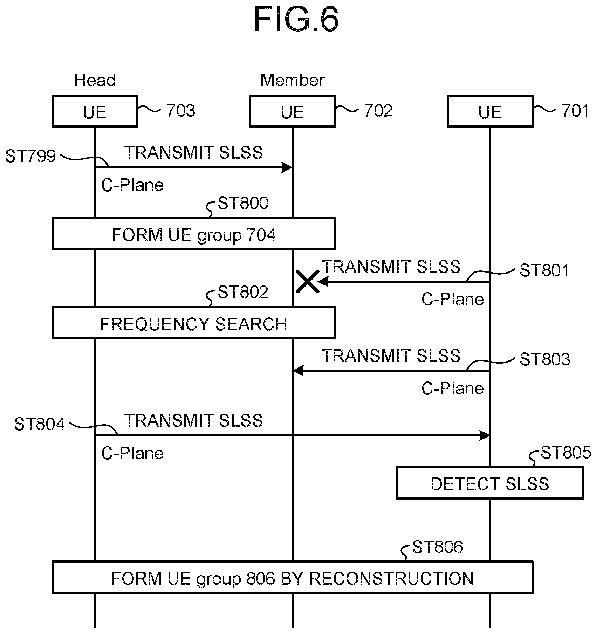

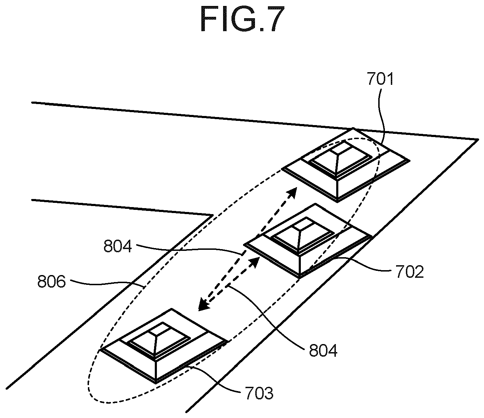

A process in a comparative example will next be described. FIG. 5 is a diagram illustrating a situation in which multiple UEs according to a comparative example, each of which is a wireless device, are running on a pathway. FIG. 6 is an operational sequence diagram in the comparative example. FIG. 7 is a diagram illustrating a situation in which the UEs illustrated in FIG. 5 are now in a line-of-sight environment. A UE 702, which is a member UE, and a UE 703, which is the head UE, are running in formation, and belong to a same UE group 704. The UE 702 and the UE 703 move in a direction toward a UE 701, which does not belong to the UE group 704.

The UE 701, not belonging to the UE group 704, periodically transmits an SLSS 706 while moving in a direction toward the UE 702, which is the member UE. The UE 702 and the UE 703 communicate, to each other, information (mutual location information, brake information, accelerator information, etc.) required to run in formation using a Sidelink link 705.

As illustrated in FIG. 6, an SLSS transmitted from the UE 703 is received by the UE 702 (ST 799), thereby causing a UE group 704 to be formed in which the head UE is the UE 703, and the member UE is the UE 702 (ST 800). The SLSS 706 transmitted from the UE 701 is not received by the UE 702 (ST 801) before a frequency search (ST 802), but is received by the UE 702 (ST 803) after the frequency search (ST 802). However, due to a member of the UE group 704 in the comparative example, the UE 702 discards information of the SLSS 706. In the situation illustrated in FIG. 5, the UE 701 is in a non-line-of-sight environment with respect to the UE 703, which is the head UE, and therefore the SLSS 706 is not received by the UE 703, or the SLSS from the UE 703 is not received by the UE 701 even after the frequency search.

As illustrated in FIG. 7, when the UEs 701, 702, and 703 run to bring the UE 703 and the UE 701 into a line-of-sight environment with respect to each other, an SLSS 804 transmitted from the UE 703, which is the head UE, is received by the UE 701 (ST 804). When the UE 701 detects the SLSS 804 (ST 805), the UE 701 belongs to a UE group 806 formed by reconstruction (ST 806).

That is, in the comparative example, the location of the UE 701 will not be recognized by the UE 703 until the UE 703 and the UE 701 will be in a line-of-sight environment with respect to each other. Thus, a collision between the UE 702 and the UE 701 is unavoidable when the running course of the UE 702 running ahead and the running course of the UE 701 overlap each other before the UE 703 and the UE 701 will be in a line-of-sight environment with respect to each other.

In contrast, in the present embodiment, when the member UE receives an SLSS from a UE not belonging to the UE group, a new head UE is selected to enable the locations of all the UEs to be recognized, thereby enabling an operation to be performed to avoid a collision between UEs even before the head UE and the UE not belonging to the UE group will be in a line-of-sight environment.

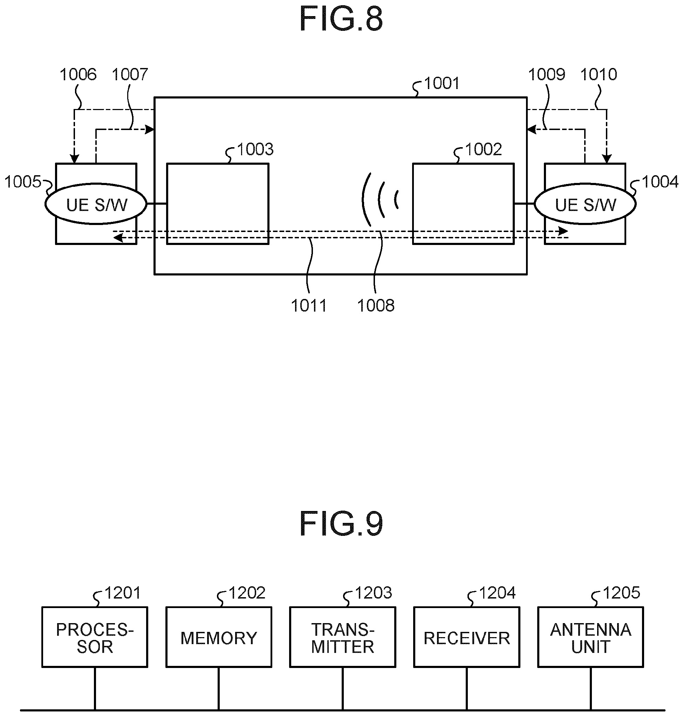

A configuration of this system will next be described. FIG. 8 is a diagram illustrating a configuration of a system according to the first embodiment. An NR-V2V/C-V2V system 1001 includes therein a head UE function 1002 and a member UE function 1003, which communicate with each other via Sidelink or the like.

Head UE-side software 1004 includes a processing block for performing a new head UE selection (ST 507). The software 1004 includes a function to cause the new head UE to transmit a head switching request (ST 508) based on a processing result. The software 1004 includes a processing block to perform an operation of switching from the head UE to a member UE (ST 510) on the head UE function 1002.

Member UE-side software 1005 includes a function of commanding a frequency search (ST 502), a function of detecting an SLSS (ST 504), a function of notifying the head UE-side software 1004 of SLSS information (ST 505), a function of transmitting a head switching response (ST 509), and a function of notifying the member UE function 1003 of switching from a member UE to the head UE (ST 511).

The NR-V2V/C-V2V system 1001 includes a function of notifying the software 1005 of the arrival direction and reception strength of an SLSS as SLSS information transmitted by the UE 401, and notifies the software 1005 of a TA value between the member UE and the head UE, using a signal line 1006 transmitted from the NR-V2V/C-V2V system 1001 to the member UE-side software 1005.

In addition, a request for switching from the member UE to the head UE is transmitted from the member UE-side software 1005 to the NR-V2V/C-V2V system 1001 using a signal line 1007.

Similarly, a signal line 1010 extending from the NR-V2V/C-V2V system 1001 to the head UE-side software 1004 has a function of notifying the software 1004 of the arrival direction and reception strength of an SLSS as SLSS information from the UE 401, and notifies the software 1004 of a TA value between the head UE and the member UE.

Thus, even the head UE periodically performs a frequency search, and has a function of changing the status from the head UE to a member UE when a head UE having a higher level than the level of that UE or a base station is found.

Accordingly, when notification of SLSS information from the UE 401 is provided from the signal line 1010, the UE 401 is considered to be in a line-of-sight environment, and the process of the new head UE selection (ST 507) is therefore not performed.

A signal line 1009 is used for causing the head UE-side software 1004 to provide notification of a request for switching from the head UE to the member UE when the head UE itself needs to be changed to a member UE in the new head UE selection (ST 507).

An inter-application communication 1008 is used to provide notification of the arrival direction and reception strength of an SLSS as SLSS information and the TA value between the member UE and the head UE from the member UE-side software 1005 to the head UE-side software 1004, and the software 1004 performs the new head UE selection (ST 507) based on the foregoing information.

An inter-application communication 1011 is used by the member UE-side software 1005 to provide notification of a change to a new head UE and switching timing when the member UE is determined to be changed to a new head UE in the new head UE selection (ST 507).

A hardware configuration of the UEs will next be described. FIG. 9 is a diagram illustrating an example of hardware configuration of the UEs according to the first embodiment. Each of the UEs includes a processor 1201, a memory 1202, a transmitter 1203, a receiver 1204, and an antenna unit 1205.

The processor 1201 is a central processing unit (CPU) (also known as processing unit, computing unit, microprocessor, microcomputer, and digital signal processor (DSP)), a system large scale integration (LSI), or the like. The memory 1202 is a random access memory (RAM), a read-only memory (ROM), an erasable programmable read-only memory (EPROM), an electrically erasable programmable read-only memory (EEPROM) (registered trademark), or the like.

The control unit 1107, the protocol processing unit 1105, the application unit 1106, the demodulation unit 1103, and the modulation unit 1110 are implemented in the processor 1201. The functionalities of the control unit 1107, the protocol processing unit 1105, the application unit 1106, the demodulation unit 1103, and the modulation unit 1110 are implemented by the processor 1201 by executing a program that describes the processes to be performed. Software is stored in the memory 1202. The transmission data buffering unit 1108 is implemented in the memory 1202. The encoder unit 1109 is implemented in the transmitter 1203. The decoder unit 1104 is implemented in the receiver 1204. The antenna 1101 and the frequency conversion unit 1102 are implemented in the antenna unit 1205.

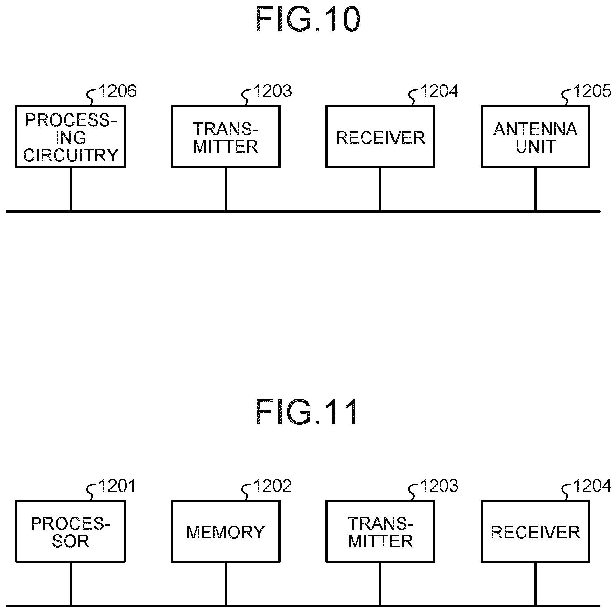

FIG. 10 is a diagram illustrating another example of hardware configuration of the UEs according to the first embodiment. According to this example, each of the UEs includes a processing circuitry 1206, the transmitter 1203, the receiver 1204, and the antenna unit 1205. In this example, the functionalities of the processor 1201 and the memory 1202 illustrated in FIG. 9 are implemented in the dedicated processing circuitry 1206.

FIG. 11 is a diagram illustrating still another example of hardware configuration of the UEs according to the first embodiment. According to this example, each of the UEs includes the processor 1201, the memory 1202, the transmitter 1203, and the receiver 1204. In this example, the functionality of the antenna unit 1205 illustrated in FIG. 9 is implemented by a wiring pattern formed on at least one of substrates included in the transmitter 1203 and in the receiver 1204.

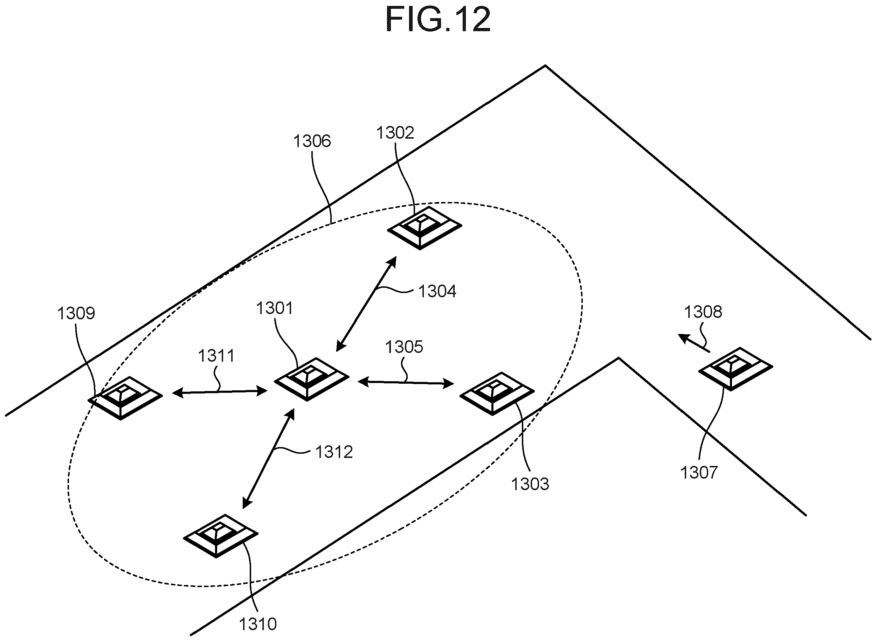

An example of selection of a new head UE when a UE group includes multiple member UEs will next be described. FIG. 12 is a diagram illustrating a situation in which a UE group includes multiple member UEs at forward and backward positions along a travel direction of the UE group in the first embodiment.

There are multiple UEs 1302, 1303, 1309, and 1310, which are member UEs, around a UE 1301, which is the head UE. The UEs 1302, 1303, 1309, and 1310 communicate with one another using Sidelinks 1304, 1305, 1311, and 1312 to form a UE group 1306.

An SLSS 1308 transmitted from a UE 1307 not belonging to the UE group 1306 is receivable by the UE 1302 and the UE 1303, and not receivable by the UE 1301, the UE 1309, or the UE 1310 due to non-line-of-sight environment. In this case, the UE 1301, which is the head UE, receives information about the SLSS 1308 transmitted from the UE 1307 from both the UE 1302 and the UE 1303. The pieces of SLSS information received by the UE 1301 respectively from the UE 1302 and the UE 1303 respectively include the arrival direction and reception strength of the SLSS 1308 obtained by analysis performed by the UE 1303, and the arrival direction and reception strength of the SLSS 1308 obtained by analysis performed by the UE 1302. In addition, the UE 1301 compares the results of analysis.

In the new head UE selection (ST 507) illustrated in FIG. 4, a process is performed of selecting the UE 1303, which has received the SLSS 1308 having a higher reception strength, as the new head UE based on the comparison result.

The foregoing process is applicable to an example in which the UE group 1306 is running in formation with the member UE 1302 positioned at the front, and the UE 1307 is running in a direction toward the UE 1303. The UE group 1306 travels along the path, and is thus to turn right shortly while running in formation.

When the UE 1301 knows in advance that the UE 1303 and the UE 1302 are to turn right, the UE 1301 may use a weight in the above comparison in the reception direction and in the reception strength, and preferentially select the member UE on the right in the travel direction as the new head UE.

In addition, when the UE 1301 knows in advance the travel direction of the UE group 1306, and there is a non-line-of-sight environment in the planned running course, the UE 1301 may select the member UE running at the front in the travel direction of the UE group 1306 as the new head UE before the UE 1302 and the UE 1303 receive the SLSS 1308 from the UE 1307.

An example will next be described in which the UE group 1306 is running in a travel direction different from the foregoing direction. In this example, the UE group 1306 is running in formation in the direction toward the UE 1309, and is in the situation illustrated in FIG. 12. In addition, the UE 1307 is running in the direction toward the UE 1303. Moreover, the UE group 1307 moves faster than the UE 1306. Furthermore, it is assumed that the UE 1302 and the UE 1303 were unable to receive the SLSS 1308 from the UE 1307 before the UE group 1306 turns the corner, while after the UE group 1306 has completely turned the corner, the UE 1307 comes near the UE group 1306, thereby causing the UE 1302 and the UE 1303 to reach an SLSS 1308 receivable area.

The SLSS 1308 transmitted from the UE 1307 is receivable by the UE 1302 and the UE 1303, and not receivable by the UE 1301, the UE 1309, or the UE 1310 due to a non-line-of-sight environment with respect to the UE 1307.

The pieces of same SLSS information received by the UE 1301 respectively from the UE 1302 and the UE 1303 respectively include the arrival direction and reception strength of the SLSS 1308 obtained by analysis performed by the UE 1303, and the arrival direction and reception strength of the SLSS 1308 obtained by analysis performed by the UE 1302. The UE 1301 compares the results of analysis.

In the new head UE selection (ST 507), a process is performed of selecting the UE 1303, which has received the SLSS 1308 having a higher reception strength, as the new head UE based on the comparison result.

Since the UE group 1306 has traveled along the path, the UE 1301 knows that the UE group 1306 has previously turned left while running in formation. Thus, the UE 1301 may use a weight in the above comparison in the reception direction and in the reception strength, and preferentially select the UE 1303 on the left in the travel direction of the UE group 1306 as the new head UE. That is, the UE 1301 may select a new head UE based on an earlier moving route of the UE group 1306.

In addition, when the UE 1301 knows the earlier moving route of the UE group 1306, and there is a non-line-of-sight environment in a backward position, the UE 1301 may select a member UE running at a backward position in the travel direction of the UE group 1306 as the new head UE before the UE 1302 and the UE 1303 receive the SLSS 1308 from the UE 1307.

The configurations described in the foregoing embodiment are merely examples of various aspects of the present disclosure. These configurations may be combined with a known other technology, and moreover, part of such configurations may be omitted and/or modified without departing from the spirit of the present disclosure.

### Reference Signs List

1 wireless device; 2 wall; 401, 403, 404, 701, 702, 703, 1301, 1302, 1303, 1307, 1309, 1310 UE; 405, 413, 704, 806, 1306 UE group; 1101 antenna; 1102 frequency conversion unit; 1103 demodulation unit; 1104 decoder unit; 1105 protocol processing unit; 1106 application unit; 1107 control unit; 1108 transmission data buffering unit; 1109 encoder unit; 1110 modulation unit; 1201 processor; 1202 memory; 1203 transmitter; 1204 receiver; 1205 antenna unit; 1206 processing circuitry.

## Claims

1. A wireless device operable to switch between a function of a master wireless device and a function of a slave wireless device in a group to which a plurality of wireless devices belong, the plurality of wireless devices communicating with each other using a synchronization signal, the master wireless device being a wireless device that controls another wireless device belonging to the group, the slave wireless device being a wireless device that is controlled by the master wireless device, the wireless device comprising:
a transmission unit capable of transmitting a signal;
a reception unit capable of receiving a signal; and
a control unit to cause the transmission unit to transmit, toward the master wireless device, information about a synchronization signal detected, when the wireless device is operating as the slave wireless device, and the reception unit receives and detects the synchronization signal from a non-group-member wireless device not belonging to the group.

2. The wireless device according to claim 1, wherein the information about the synchronization signal transmitted toward the master wireless device includes an arrival direction of the synchronization signal and a reception strength of the synchronization signal.

3. The wireless device according to claim 1, wherein the control unit causes the transmission unit to transmit, toward the master wireless device, information about a Timing Advance (TA) value or a relative location between the slave wireless device and the master wireless device when the wireless device is operating as the slave wireless device.

4. The wireless device according to any one of claims 1 to 3, wherein notification to the information about the synchronization signal from the slave wireless device to the master wireless device is performed through inter-application communication.

5. The wireless device according to any one of claims 1 to 4, wherein the control unit has functionality to select a slave wireless device that is nearest to the non-group-member wireless device based on the information about the synchronization signal received from the slave wireless device, the synchronization signal being not directly received from the non-group-member wireless device when the wireless device is operating as the master wireless device, and the information about the synchronization signal is received from the slave wireless device.

6. The wireless device according to claim 5, wherein the control unit of the master wireless device causes the transmission unit to transmit a switching request that instructs the slave wireless device selected, to operate as a master wireless device.

7. The wireless device according to claim 6, wherein when the slave wireless device selected is instructed to operate as a master wireless device, and determines to be able to operate as a master wireless device, the control unit of the slave wireless device selected causes the transmission unit to transmit a switching response stating that the slave wireless device selected can operate as a master wireless device.

8. The wireless device according to claim 7, wherein upon reception of the switching response, the control unit of the master wireless device causes the master wireless device to change to operate as the slave wireless device.

9. The wireless device according to claim 8, wherein the master wireless device and the slave wireless device transmit and receive a countdown notification to and from each other to switch between operation as the master wireless device and operation as the slave wireless device.

10. The wireless device according to claim 8 or 9, wherein selection of the slave wireless device and switching between operation as a master wireless device and operation as a slave wireless device are performed within a transmission interval of the synchronization signal transmitted by the non-group-member wireless device.

11. The wireless device according to claim 5, wherein the control unit of the master wireless device selects the slave wireless device based on an earlier moving route of the wireless device belonging to the group.

12. The wireless device according to claim 5, wherein the control unit of the master wireless device selects the slave wireless device based on a planned moving route of the wireless device belonging to the group.

13. A control circuit for controlling a wireless device operable to switch between a function of a master wireless device and a function of a slave wireless device, the master wireless device being a wireless device that controls another wireless device belonging to a group, the slave wireless device being a wireless device that is controlled by the master wireless device, wherein the control circuit causes the wireless device to perform:
a step of receiving and detecting a synchronization signal from a non-group-member wireless device not belonging to the group when the wireless device is operating as the slave wireless device; and
a step of causing transmission of information about the synchronization signal detected, toward the master wireless device.

14. A storage medium storing a program for controlling a wireless device operable to switch between a function of a master wireless device and a function of a slave wireless device, the master wireless device being a wireless device that controls another wireless device belonging to a group, the slave wireless device being a wireless device that is controlled by the master wireless device, wherein
the program causes the wireless device to perform:
a step of receiving and detecting a synchronization signal from a non-group-member wireless device not belonging to the group when the wireless device is operating as the slave wireless device; and
a step of causing transmission of information about the synchronization signal detected, toward the master wireless device.
